(19) Europäisches Patentamt

European Patent Office

Office européen des brevets

(11) EP 0 561 219 B1

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int Cl.⁶: **H05B 6/12**

(21) Anmeldenummer: **93103381.5**

(22) Anmeldetag: **04.03.1993**

(54) **Induktive Kochstellenbeheizung**

Induction heating for cooking places

Places de cuisson à chauffage inductif

(84) Benannte Vertragsstaaten:
**CH DE ES FR GB IT LI SE**

(30) Priorität: **14.03.1992 DE 4208253**
**24.07.1992 DE 4224405**

(43) Veröffentlichungstag der Anmeldung:
**22.09.1993 Patentblatt 1993/38**

(73) Patentinhaber: **E.G.O. Elektro-Gerätebau GmbH**
**75038 Oberderdingen (DE)**

(72) Erfinder:
• **Essig, Willi**
**W-7030 Böblingen (DE)**

• **Bogdanski, Franz**
**W-7519 Oberderdingen (DE)**
• **Fettig, Günter**
**W-7500 Karlsruhe-Grötzingen (DE)**
• **Horn, Jürgen**
**W-7527 Kraichtal 6 (DE)**

(74) Vertreter: **Patentanwälte**
**Ruff, Beier, Schöndorf und Mütschele**
**Willy-Brandt-Strasse 28**
**70173 Stuttgart (DE)**

(56) Entgegenhaltungen:
**DE-A- 2 230 186       US-A- 4 092 511**
**US-A- 4 551 600       US-A- 4 629 843**
**US-A- 4 833 288**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

<u>Stand der Technik</u>

Die Erfindung betrifft eine induktive Kochstellenbeheizung für Kochgefäße o. dgl. und geht aus von US-A-4'629'843.

Induktionsbeheizungen haben den Vorteil einer sehr trägheitsarmen Wärmeerzeugung unmittelbar im Kochgefäß, nämlich im Kochtopfboden. Das Kochgerät selbst bleibt weitgehend kalt. Ihr Nachteil ist der relativ hohe Bauaufwand und die schwierige Steuerbarkeit. Da zur notwendigen Hochfrequenzerzeugung und ihrer Steuerung elektronische Bauteile benötigt werden und andererseits durch die Verlustwärme in der Elektronik und der Induktionsspule sich die Induktionserzeugungsmittel doch stärker erwärmen, war es notwendig, die Umwandlungs- und Steuerelektronik getrennt von der Kochstelle anzuordnen. Dadurch wurde der Einbau in normale Kochherde oder Kochmulden behindert und Induktionskochstellen waren daher meist in Sondergeräten eingebaut.

Aus den Druckschriften US-A-4 629 843 und US-A-4 551 600 sind Induktionskochstellen bekanntgeworden, die in einer zusammenhängenden Baueinheit die Induktionsspule und auch die zugehörige Leistungs- und Steuerelektronik einschließlich der Frequenzgenerierung enthalten. Sie sind als unabhängige Einzelkocher bzw. Kochmulden ausgebildet und haben eine eigene Abdeckplatte, auf die die Kochgefäße gestellt werden können.

<u>Aufgabe</u>

Aufgabe der Erfindung ist es, eine einfach handhabbare und auch in übliche Kochgeräte einbaubare induktive Kochstellenbeheizung zu schaffen, die praktisch anschlußfertig ist.

<u>Lösungen und Erläuterungen</u>

Diese Aufgabe wird durch den Anspruch 1 gelöst.

Es wird eine einfach handhabbare Beheizungseinheit geschaffen, die außer den Induktionserzeugungsmitteln, meist Induktionsspulen, auch die gesamte Leistungs- und Steuerungselektronik einschl. der Frequenzgenerierung enthält. Extern braucht nur noch ein Einstellelement zu sein, das auch einen Steuer-Mikro-Computer oder andere, vorzugsweise programmierbare Steuerelektronik enthalten kann. Wesentlich ist, daß diese Einheit praktisch anstelle einer anderen Kochstellenbeheizung, beispielsweise einer Strahlheizeinheit, unter der Glaskeramikplatte einer Kochmulde oder eines Herdes angeordnet und wie eine solche Einheit über Federn o. dgl. von unten an diese Platte angedrückt werden kann. Dabei kann eine vorzugsweise zwischen der Induktionsspule und der Glaskeramik-platte angeordnete thermische Isolierung eine thermische Rückwirkung des Kochgefäßes auf die Induktionserzeugungsmittel verhindern und gleichzeitig als mechanischer Puffer und als elektrische Isolierung wirken.

Wenn vorzugsweise eine solche Beheizungseinheit mehrere, insbesondere zwei Induktionskochstellen enthält, dann kann die Steuer- und Leistungselektronik weitgehend für beide gemeinsam sein. Nur die eigentliche Hochfrequenzerzeugung, d. h. die Leistungsschwingkreise, wären dann für jede Kochstelle einzeln vorzusehen.

Da trotz aller Optimierungsmaßnahmen sowohl die Induktionserzeugungsmittel als auch die Leistungselektronik Wärme erzeugt und die Elektronik, um handelsübliche Bauelemente einsetzen zu können, vor höheren Temperaturen geschützt werden sollte, sind die Induktionserzeugungsmittel an einem Kühlkörper anzuordnen, der an seiner Unterseite Kühlrippen und entsprechende Kühlkanäle hat, durch die ein Lüfter Kühlluft bläst. Insbesondere die Leistungselektronik kann direkt in Kontakt mit dem Kühlkörper angeordnet sein, während die übrige Elektronik beispielsweise auf einer die Kühlkanäle nach unten abschließenden Platine, jedoch im Bereich des Kühlluftstromes, angeordnet sein kann.

Bei einer vorteilhaften Ausführungsform ist der Lüfter in einer Ausnehmung des Kühlkörpers angeordnet und besteht aus einem von unten ansaugenden Radiallüfter, der so exzentrisch in der Ausnehmung liegt, daß bei einfachstem Aufbau sich ein in Strömungsrichtung zunehmender Querschnitt des das Lüfterrad umgebenden Raumes ergibt. Es entsteht somit auch bei einer kreisförmigen Ausnehmung praktisch die Wirkung eines schneckenförmigen Lüftergehäuses, von dem die Luft unmittelbar in daran angrenzende Kühlkanäle strömen kann. Dabei wird die Anordnung so getroffen, daß eine der seitlich gelegenen Kühlrippen besonders gut mit Kühlluft beaufschlagt wird. An dieser sind in einem äußeren, parallel zum Kühlkörper verlaufenden Raum die Steuerelemente angeordnet und an diese Außenrippe direkt angeflanscht. Es ergibt sich somit eine ungestörte Kühlluftströmung in den Kühlkanälen, die frei von Bauelementen sind, während die Wärmeübertragung der hauptsächlich wärmeerzeugenden Leistungssteuerelemente über die Wärmeleitung des Kühlkörpers erfolgt (indirekte Kühlung).

Damit sind auch die Bauelemente von Verschmutzungen durch die sie umströmende Luft befreit.

Es kann allerdings zweckmäßig sein, auch diesen gesonderten "Elektronikkanal" zu belüften. Dazu könnten in der seitlichen Außenrippe Durchbrüche vorhanden sein. Insgesamt ist dieser Aufbau sehr flach und hat eine geringe Einbauhöhe. Der Radiallüfter ist, vor allem da er keinerlei Leiteinrichtungen benötigt, ein einfaches, in die Einheit zu integrierendes Bauteil.

An sich ist in einer Induktionskochstelle eine Temperaturüberwachung nicht notwendig, weil die Wärme erst außerhalb der Kochstelle, nämlich im Kochgefäß, entsteht. Trotzdem kann von dort aus Wärme auf die Platte übertragen werden und somit die Glaskeramik-

platte unzulässig überhitzen. Ein Abfühlen dieser Platte ist über herkömmliche Mittel nur schwer durchzuführen. Eine neuartige optische Meßeinrichtung wird zur Temperaturmessung der Platte verwendet. Sie enthält einen Infrarot-Fühler, beispielsweise eine Silicium-Fotodiode, der eine Temperaturmessung unter Ausnutzung des Planck'schen Strahlungsgesetzes durchführt. Mit steigender Temperatur der Glaskeramikplatte erhöht sich auch das Maximum der Frequenz der abgestrahlten Photonen (Wien'sches Verschiebungsgesetz). Ab einer bestimmten Temperatur entspricht die Energie der abgestrahlten Photonen der spektralen Empfindlichkeit des Fühlers, so daß ein auswertbares Signal entsteht, das zur Abschaltung oder Leistungsreduzierung der Beheizung verwendet wird.

Da sich solche Überhitzung der Glaskeramikplatte praktisch nur dann einstellen kann, wenn die Beheizung bestimmungswidrig gebraucht wird, beispielsweise durch Aufstellen eines leeren Topfes, sollte die Temperaturbegrenzung eine Sperrfunktion haben, d. h. nach Ansprechen der Temperaturbegrenzungsschaltung sollte die Kochstelle ausgeschaltet bleiben, bis sie manuell ausgeschaltet und dann wieder eingeschaltet wird. Dies ist durch die Steuerelektronik, beispielsweise einen Mikro-Computer, leicht vorzusehen.

Diese und weitere Merkmale von Ausbildungsbeispielen der Erfindung gehen aus der Beschreibung und den Zeichnungen hervor.

### Figuren-Kurzbeschreibung

Ausführungsbeispiele der Erfindung sind in der Zeichnung dargestellt und werden im folgenden näher erläutert. Es zeigen:

Fig. 1       eine Draufsicht auf ein Bauelement zur induktiven Kochstellenbeheizung,

Fig. 2       einen schematischen Längsschnitt durch das Bauelement,

Fig. 3       einen Querschnitt,

Fig. 4       ein Blockschaltbild der Steuerung und Leistungsversorgung von zwei Induktionsspulen,

Fig. 5       ein teilweise detaillierteres Schaltbild für den Betrieb einer Induktionsspule,

Fig. 6 + 7       schematische Darstellungen einer Abschirmung,

Fig. 8a) - d)       Darstellungen "Strom über Zeit" verschiedener Impulsgrundmuster,

Fig. 9       eine tabellarische Darstellung der Zusammensetzung einzelnen Leistungsstufen aus Grundimpulsmustern,

Fig. 10       ein erläuterndes Diagramm eines Strom/Zeitverlaufes,

Fig. 11a) + b)       den Strom/Zeitverlauf und die zugehörigen Einschaltzeiten eines Topferkennungs-Prüfzyklus

Fig. 12       einen Querschnitt durch eine Litze, aus der eine Induktionsspule aufgebaut ist,

Fig. 13       einen Querschnitt durch eine Variante eines Bauelementes,

Fig. 14       eine Unter-Ansicht eines Kühlkörpers und

Fig. 15       eine schematische Darstellung einer Baueinheit mit zwei Induktions- und zwei Strahlungsheizelementen.

### Bauelement

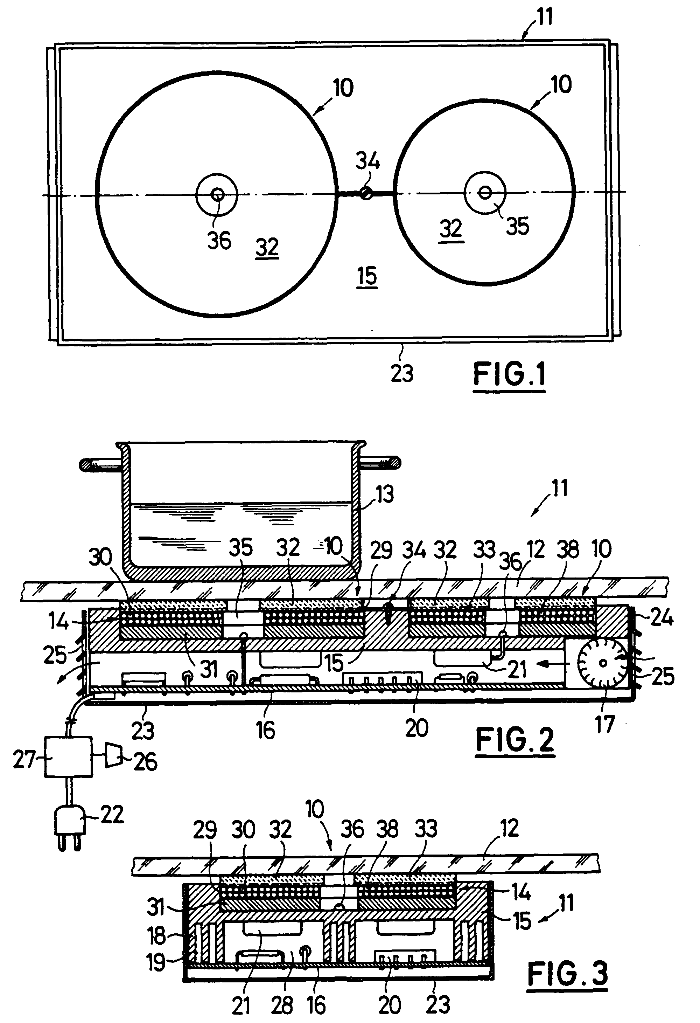

Die Fig. 1 bis 3 zeigen ein Bauelement 11 für zwei Induktions-Kochstellen 10. Es ist zur Anordnung unter einer Platte 12 vorgesehen, beispielsweise einer Glaskeramik-Platte. Das Bauelement bildet eine kompakte, relativ flache, handhabbare Baueinheit, die mit Ausnahme des Netzanschlusses und eines Einstell- und Regelorgans 27 mit Einstellknopf 26, das auch eine Leistungssteuereinrichtung beinhalten kann, die alle zum Betrieb notwendigen Elemente enthält. Das Bauelement kann beispielsweise durch nicht dargestellte Federelemente von unten an die Platte 12 angedrückt werden. Durch diese Anordnung und den Einschluß aller wesentlichen Bauteile läßt sich die Induktions-Beheizung auch anstelle und zusätzlich zu üblichen Strahlungs-Kochstellen in einem Glaskeramik-Kochfeld anordnen.

Das Bauelement enthält in einer Blechschale 23 einen Kühlkörper 15, vorzugsweise ein Aluminiumformteil mit oben weitgehend geschlossener Fläche und Kühlrippen 18 an der Unterseite, die zwischen sich Kühlkanäle 19 bilden. Sie verlaufen etwa längs einer die beiden Kochstellen 10 verbindenden Achse 9. An der Oberseite besitzt der Kühlkörper Ausnehmungen 29, in denen Induktionserzeugungsmittel 14 angeordnet sind, die jeweils einer Kochstelle 10 zugeordnet sind. An der Unterseite des Kühlkörpers ist eine Platine 16 vorgesehen, beispielsweise mit den äußeren Kühlrippen verschraubt, so daß die Kühlkanäle 19 und weitere, ebenfalls als Kühlkanäle dienende größere Räume 28 an der Unterseite des Kühlkörpers 15 einschließen. In diesen sind, vorzugsweise in wärmeleitender Verbindung mit dem Kühlkörper 15, elektronische Leistungssteuerelemente 21 angeordnet. Die Platine trägt ebenfalls elektronische Bauelemente, jedoch vorwiegend die zur Steuerung eingesetzten, mit relativ kleinen Strömen und daher geringerer Erwärmung arbeitenden Elemente. Das ganze ist passend in eine Blechschale eingesetzt. Die Platine könnte aber auch selbst die untere Abdeckung bilden. Im Bereich einer kurzen Randseite 24 des langgestreckt rechteckigen Bauelementes 11 sind Lüftungsöffnungen 25 vorgesehen, durch die ein in einer Ausnehmung des Kühlkörpers 15 angeordneter Ventilator 37 Luft ansaugt bzw. nach Durchströmen der Kühlkanale 19, 28 ausbläst. Auch ein mittig auf dem Kühlkörper angeordneter Ventilator mit einem Luftaustritt nach zwei oder mehr Seiten ist möglich. Dadurch werden die Leistungssteuerelemente und die Steuerelektronik unmittelbar vom Kühlluftstrom gekühlt und die Leistungssteuerelemente geben zudem ihre Wärme durch Leitung an den luftgekühlten Kühlkörper ab.

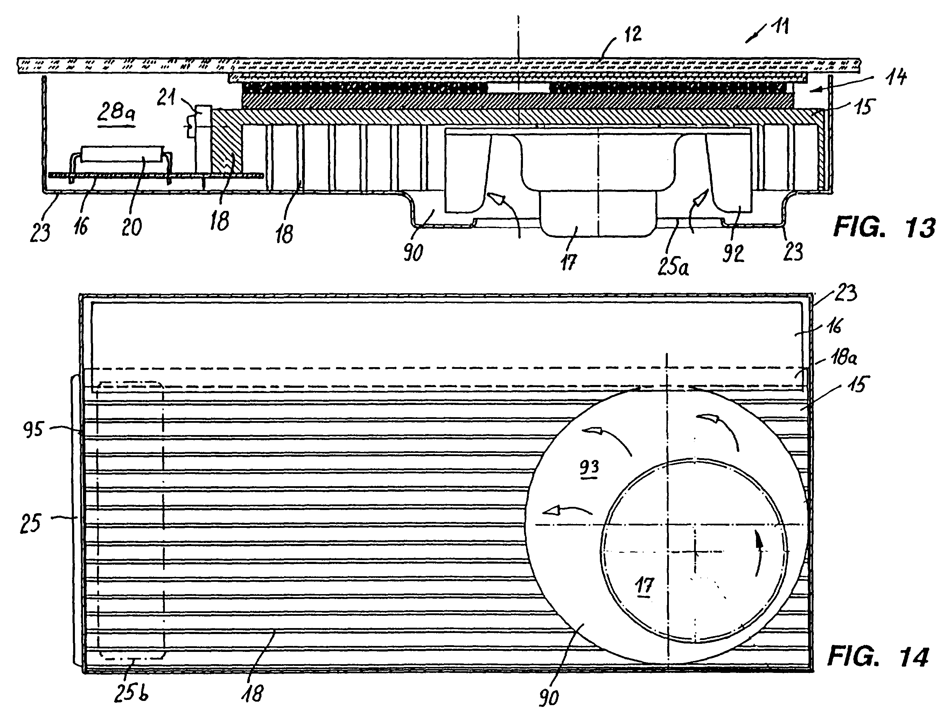

Fig. 13 bis 15 zeigen eine detaillierte dargestellte Variante eines Bauelementes, das bis auf die im folgenden beschriebenen Unterschiede mit der anhand Figur 1 bis 3 beschriebenen Variante übereinstimmt.

Der Kühlkörper 15 ist eine Platte, die an ihrer Oberseite eben ist und darauf die Induktionserzeugungsmittel 14, die im folgenden noch beschrieben werden, trägt. Kühlrippen 18 sind in gleichmäßigen Abständen an der Unterseite vorgesehen. Die äußere Kühlrippe 18a an einer Seite ist besonders dick ausgeführt. Bei dem Kühlkörper kann es sich um ein Aluminium-Strangpressprofil handeln.

An der Unterseite hat der Kühlkörper eine kreisförmige Ausnehmung, die zumindest soweit eingeschnitten ist, daß in ihrem Bereich die Kühlrippen 18 entfernt sind. Sie erstreckt sich zwischen den jeweiligen Außen-Kühlrippen des Kühlkörpers.

Exzentrisch zu dieser Ausnehmung, und zwar sowohl gegenüber die Längsachse des Kühlkörpers als auch gegenüber der quer dazu liegenden Mittelachse der Ausnehmung 90 versetzt, ist ein Radiallüfter angeordnet. Er kann beispielsweise an die Unterseite der durchgehenden oberen Platte 15a des Kühlkörpers angeflanscht sein. Es handelt sich um einen üblichen Außenläufer-Radiallüfter 17, dessen rotierender Außenläufer ein Lüfterrad mit radialen Lüfterschaufeln 92 trägt. In der unteren Abdeckung 23 ist zentral zu dem Lüfter eine mittlere Ansaugöffnung 25a ausgebildet, durch die der Lüfter von unten her ansaugt und die Luft mit einem gewissen Drall in Drehrichtung (siehe Fig. 14) in den zwischen der Außenbegrenzung der Ausnehmung 90 und dem Lüfterrad gebildeten Raum 93 fördert. Infolge des exzentrischen Versatzes hat dieser Raum eine unterschiedliche Breite und dadurch unterschiedlichen Querschnitt. Der Querschnitt ist am größten in der Richtung, die vom Lüfter schräg zu der verstärkten Außenrippe 18a weist. Dieser Raum bildet daher praktisch einen Leitapparat nach Art einer Lüftervolute bzw. eines Schneckengehäuses, wie es bei Radiallüftern eingesetzt wird, ist jedoch wesentlich leichter herzustellen. Es sorgt für eine gute Luftverteilung mit einer gewissen Bevorzugung für die der Außenrippe 18a zugekehrte Seite. In dem Raum beruhigt sich auch die Luft und trägt so zu geringer Geräuschbildung bei.

An dem Ende 94, das dem Lüfter benachbart liegt, sind die Kühlrippen durch den Rand 24 der Abdeckung 23 geschlossen, während sie auf der gegenüberliegenden Seite 95 Öffnungen 25, wie in Fig. 2 angedeutet, haben können. Es ist jedoch auch möglich, den Luftaustritt nach unten vorzusehen, in dem auch die Seite 95 der Kühlrippen abgedeckt ist und in einem in Fig. 14 strichpunktiert angedeuteten Bereich 25a eine untere Öffnung der Abdeckung 23 vorgesehen ist.

Fig. 13 zeigt, daß angrenzend an die verstärkte Außenkühlrippe 18a ein längs des Kühlkörpers verlaufender Raum 28a innerhalb der Abdeckung 23 gebildet ist, in dem die Steuerelektronik 20, 21 angeordnet ist. Die Anschlüsse erfolgen über eine Platine oder Leiterplatte 16, die sich über die Unterseite der Außenrippe 18a hinweg erstreckt und an dieser befestigt sein kann. Dies wird jedoch meist nicht erforderlich sein, weil auf ihre elektronisch angeschlossene Leistungssteuerelemente 21 unmittelbar seitlich gegen die Außenrippe 18a geschraubt sind, so daß sie ihre Wärme dorthin per Kontaktwärmeübertragung abgeben können.

Die anderen, sich nicht wesentlich erwärmenden Elektronik-Bauelemente 20 können mit Abstand von dieser Außenrippe 18 auf der Platine angeordnet sein, die parallel zur Kochfläche und zum Boden der Abdeckung 23 verläuft.

Die Kühlkanäle können also von dem Lüfter ungestört durchströmt werden und die Wärme wird durch Leitung in die Kühlrippen und von dort durch den Kühlluftstrom abtransportiert. Eine Belüftung des Raums 28a über Durchlässe in der Außenrippe 18a ist möglich.

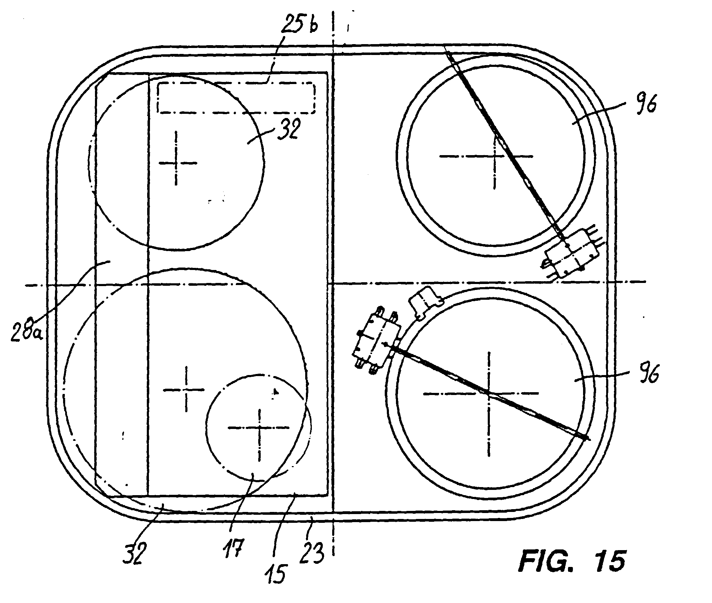

Fig. 15 zeigt ein Kombinations-Bauelement, bei dem zwei übliche Strahlheizkörper 96 mit innerhalb der Abdeckung 23, die eine untere Abdeckung der Kochmulde bilden kann, angeordnet sind. Daneben sind zwei Induktions-Kochstellen 32 vorgesehen, deren Kühlkörper so angeordnet ist, daß der die Elektronik enthaltene Raum 28 a auf der den Strahlungskocheinheiten abgewandten Seite verläuft.

Fig. 13 bis 15 zeigen eine Anordnung des Lüfters 37 im Bereich einer Schmalseite des Kühlkörpers. Eine gleichmäßige Strömungsverteilung läßt sich auch erreichen, wenn der Lüfter im Mittelbereich angeordnet ist und dementsprechend die Kühlrippen nach beiden Seiten hin durchströmt werden, also an beiden Enden des Kühlkörpers Luftauslässe vorgesehen sind. Wie auch bei auch Fig. 14 ist die Ausbildung des Raumes 93, beispielsweise durch exzentrische Anordnung des Lüfters, von der Drehrichtung des Lüfters abhängig. Dieser dreht vorzugsweise so, daß infolge des entstehenden Strömungsdralls hauptsächlich die Außenrippe 18a angeströmt wird. Bei anderer Drehrichtung oder anderer Anordnung, beispielsweise wie vorstehend beschrieben, ist der Raum anders zu gestalten bzw. die Exzentrizität anders vorzusehen.

Induktionsspule

Die Induktionserzeugungsmittel 14 bestehen aus einer Induktionsspule 30 in Form einer flachen, scheiben- bzw. ringförmigen Platte, darunter angeordneten Magnet-Rückschlußmitteln 31 und einer thermischen Isolierung 32 an der der Platte 12 zugekehrten Seite, in deren Bereich eine Abschirmung 33 vorgesehen sein kann.

Die Induktionsspule 30 enthält als Wendel und/oder Spirale gewickelte Litzen 38, die aus Einzelleitern 39 (siehe Figur 12) aufgebaut sind. Die Litze 38 ist aus mehreren, vorzugsweise fünf bis neun, im vorliegenden Falle sieben Kardeelen 40 aufgebaut, die miteinander verseilt sind und ihrerseits eine Anzahl zwischen fünf und neun, vorliegend sieben miteinander verseilter Einzeldrähte enthalten. Die Einzelleiter sind auf übliche Weise, beispielsweise durch eine wärmebeständige Lackschicht, elektrisch gegeneinander isoliert.

Die aus Kupfer bestehenden Einzelleiter 39 haben einen Durchmesser d zwischen 0,1 und 0,4 mm, vorzugsweise 0,2 mm. Dieser Wert gilt für die hier bevorzugte Frequenz des der Induktionsspule zugeführten Stromes zwischen 20 und 30 kHz, vorzugsweise ca. 25 kHz. Im einzelnen läßt sich auch für andere Frequenzen ein Basiswert D des Durchmessers des Einzelleiters nach folgender Formel ermitteln:

$$D = 1/\sqrt{\pi * k * f * \mu}$$

wobei D in Metern ermittelt wird. Die elektrische Leitfähigkeit k des Einzelleitermaterials ist in A/V*m , dessen Permeabilität $\mu$ in V*s/A*m einzusetzen ist und die Frequenz f in 1/s. Die bevorzugt verwendete Drahtstärke d liegt vorzugsweise zwischen einem Viertel und drei Viertel des nach dieser Formel berechneten Basiswertes D. Es hat sich erstaunlicherweise gezeigt, daß bei diesen geringen Durchmessern des Einzelleiters die Verlustleistung in der Induktionsspule 30 wesentlich gesenkt werden konnte.

Nach bisher vorliegenden Erkenntnissen, die auch durch theoretische Rechnungen als erwiesen galten, sollten die Spulenverluste zwar bei Verringerung des Durchmessers d bis zu einem Wert gleich dem Basiswert D nach der o. g. Formel abnehmen, danach aber kaum noch. Die theoretischen, bisher als gesichert geltenden Erkenntnisse gingen von dem Skin-Effekt eines Einzelleiters aus und ermittelten für den o. g. Durchmesser D eine optimale Größe, weil dann der gesamte Durchmesser trotz der Stromverdrängung zur Oberfläche hin gleichmäßig durchflossen sei. Der Basiswert D entspricht der Eindringtiefe des Stromes in eine Leiteroberfläche, wobei wegen der runden Drahtform sich ein Eindringen von allen Seiten gleichzeitig ergibt und somit eine gleichmäßige Strombelegung über den Querschnitt. Die von dieser Theorie ausgehende Überlegung wurde jedoch erstaunlicherweise durch Versuche widerlegt. Bevorzugt wäre sogar ein Durchmesser von weniger als 0,2 mm, d. h. geringer als der Hälfte des Basiswertes D, jedoch setzen die mechanischen Möglichkeiten der Verarbeitung einer Durchmesserverkleinerung irgendwann ein Ende.

Versuche haben gezeigt, daß die Verluste durch Wirbelströme und ohmsche Verluste in den Einzelleitern infolge der von der Spule selbst erzeugten Induktion bei aufgrund der bisherigen Theorie üblicherweise angewendeten Drahtstärken (gleich dem Basiswert D von 0,4 mm bei 25 kHz Frequenz) bei 70 - 100 W liegen, während sie bei einer Spule gleicher Leistung bei einem Drahtdurchmesser d von 0,2 mm halbiert sind und nur etwa 40 W betragen. Dadurch ist die Spulenerwärmung wesentlich geringer und neben nicht unerheblicher Energieeinsparung können sonst auftretende Probleme mit der Spulenisolierung und der Wärmeabfuhr aus der Spule ausgeschaltet werden.

Rückschlußmittel

Unter der Spule liegt, ebenfalls als flache, ringförmige Schicht mit einer mittleren Öffnung 35, das magnetische Rückschlußmittel 31, das aus Ferritsegmenten aufgebaut ist (Fig. 2, 3 und 15). Es schließt das an der Unterseite der Induktionsspule entstehende magnetische Feld mit geringem magnetischen Widerstand, jedoch hohem elektrischen Widerstand, so daß auch dort die Wirbelstromverluste gering bleiben. Daher entsteht an der Unterseite der Induktionserzeugungsmittel 14 kein wesentliches Induktionsfeld. Die magnetischen Rückschlußmittel 31 bilden ferner eine Wärmeleitbrücke zwischen der Induktionsspule 30 und dem Kühlkörper, an dem sie anliegen, so daß die Spulen-Verlustwärme unmittelbar in den Kühlkörper abgeführt wird, auch wenn, wie in Fig. 15 angedeutet, die Induktionsspule sich seitlich über den Kühlkörper hinaus erstreckt.

Thermische Isolation

Die thermische Isolation 32 liegt in Form einer die Induktionsspule 30 abdeckenden Platte mit mittlerer Öffnung 35 zwischen dieser und der Glaskeramikplatte 12. Sie besteht aus einem sehr gut wärmedämmenden und möglichst auch elektrisch isolierenden Material, beispielsweise einem pyrogenen Kieselsäure-Aerogel, das zu einer Platte verpreßt ist.

Es erscheint ungewöhnlich, das eigentliche Heizelement, nämlich die Induktionsspule, thermisch gegenüber dem wärmeaufnehmenden Kochgefäß abzuschirmen. Selbst wenn man berücksichtigt, daß die Energieübertragung durch Induktion und nicht durch Wärmeübertragung selbst geschieht, so sollte man meinen, daß zumindest für die Wärmeabfuhr der Verlustwärme in der Induktionsspule ein möglichst guter Wärmeschluß zum Verbraucher hin, dem Kochgefäß 13, vorteilhaft wäre. Es hat sich aber gezeigt, daß die Induktionsspule, insbesondere bei dem vorher erwähnten verlustarmen Spulenaufbau, so wenig Wärme erzeugt, daß durch eine Wärmebrücke zum Verbraucher diesem eher Wärme entzogen als ihm zugeführt würde. Durch die Wärmedämmung wird die Induktionsspule auf einem niedrigeren Temperaturniveau gehalten, was für die Spulenauslegung und - isolation Vorteile hat. Es ergibt sich ferner eine Wirkungsgradverbesserung dadurch, daß die Wärme des Kochgefäßes 13 nicht durch die Glaskeramikplatte 12 nach unten abgeleitet wird. Die thermische Isolation 32 bildet vorteilhaft auch gleichzeitig eine elektrische Isolation gegen die Glaskeramikplatte 12, die bei erhöhter Temperatur elektrisch leitfähig wird.

Platten-Überwachung

Im Bereich der mittleren Öffnung 35, die durch Isolation 32, Induktionsspule 30 und Rückschlußmittel 31 hindurchgeht, ist ein optischer Fühler 36 angeordnet, der die von der Glaskeramikplatte herkommende Strahlung aufnimmt (Fig. 2 und 3). Er überwacht somit mittelbar die der Glaskeramikplatte gefährlich werden könnende Temperatur des Kochgefäßes mittels berührungsloser Messung, die sonst im Magnetfeld einer Induktionskochstelle nur schwierig durchzuführen wäre. Es handelt sich also um eine Messung der Ursache für die Temperaturgefährdung der Glaskeramikplatte, da diese nur vom Kochgefäß erwärmt wird. Die Glaskeramik läßt die Strahlung weitgehend durch und ist daher selbst kaum berührungsfrei zu messen. Bei anderen Plattenmaterialien können diese auch selbst die Strahlungsquelle sein.

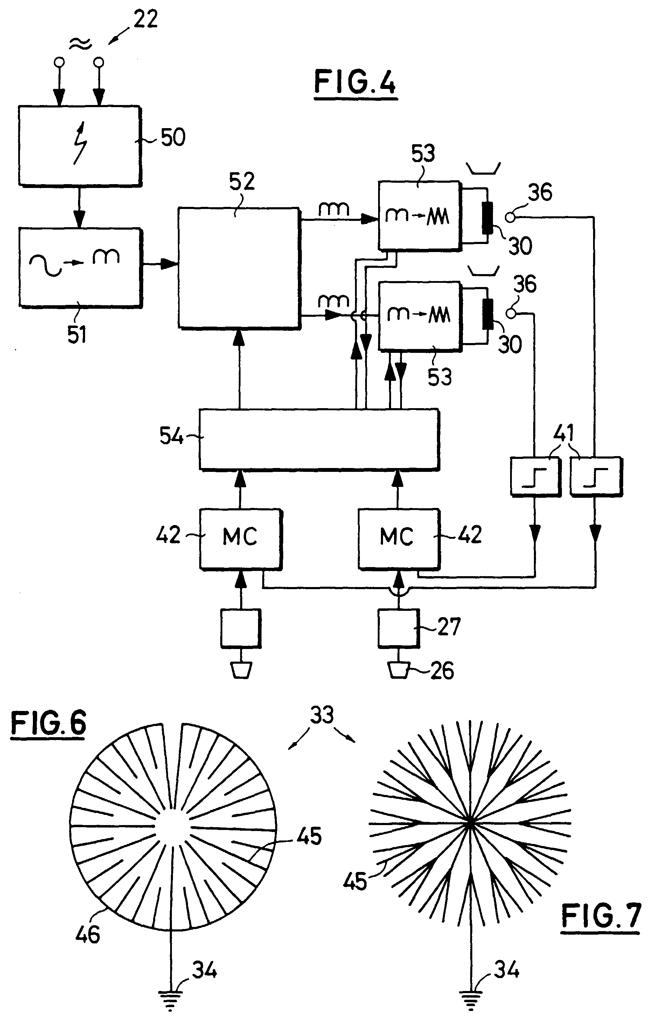

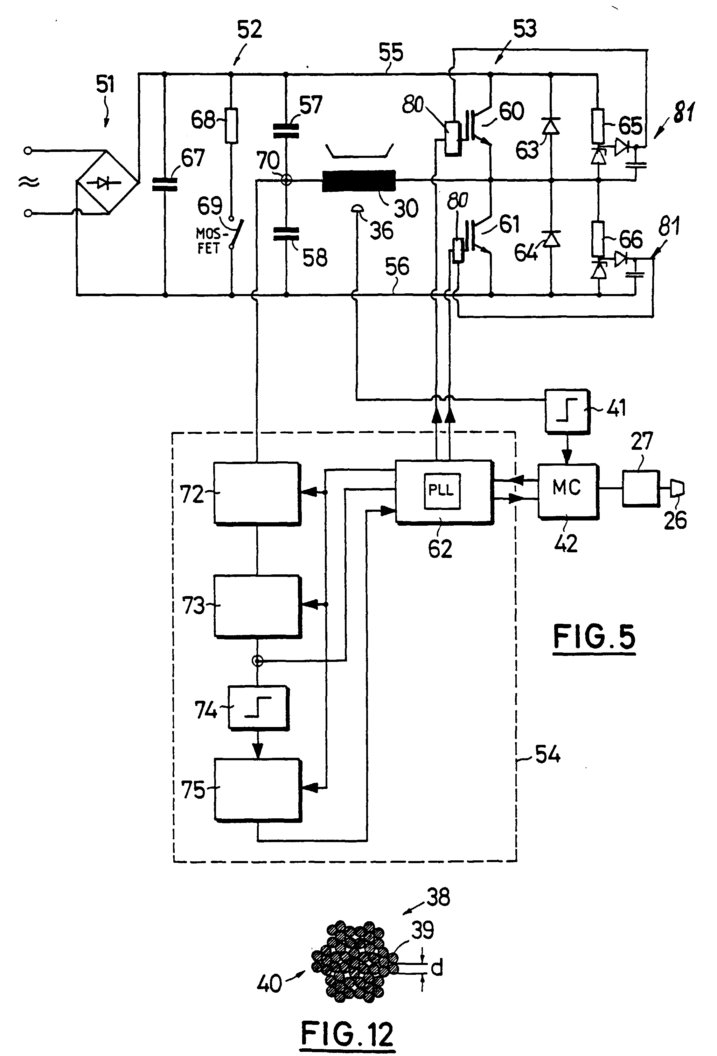

Der optische Fühler ist ein Infrarot-Detektor, dessen spektrale Empfindlichkeit im Infrarot-Bereich liegt. Bei steigender Temperatur des Kochgefäßes erhöht sich auch das Maximum der Frequenz der abgestrahlten Photonen nach dem Wien'schen Verschiebungsgesetz. Ab einer vorgegebenen Temperatur entspricht die Energie der abgestrahlten Photonen der spektralen Empfindlichkeit des IR-Detektors, so daß ein auswertbares Signal entsteht, das dann zur Abschaltung oder Verringerung der Leistung der Induktionsbeheizung verwendet wird. Dazu wirken die optischen Fühler 36 jeder Induktions-Kochstelle über Komparatoren 41 auf einen Mikro-Computer 42 ein (Fig. 4), von denen je einer zur Steuerung und Regelung einer Induktions-Kochstelle vorgesehen ist. Er ist jeweils über das Einstellorgan mit dem Einstellknopf 26 auf eine bestimmte Temperatur oder Leistungsstufe einstellbar. Die optischen Fühler 36 können Silicium-Dioden sein.

Alternativ könnten auch Meßwiderstände an die Platte angelegt werden, z. B. zwischen Isolation und Platte im Spulenbereich, wenn die Meßwiderstände vom Magnetfeld nicht oder nur wenig beeinflußt werden und eine Beeinflussung schaltungstechnisch oder im Meßprogramm kompensiert wird.

Abschirmung

Die Abschirmung 33 ist zwischen Induktionsspule 30 und Glaskeramikplatte 12 vorgesehen. Sie kann an der Unter- oder Oberseite der thermischen Isolierung 32 liegen oder vorteilhaft in sie eingebettet sein. Die Abschirmung besteht aus einem beispielsweise in den Figuren 4 und 6 dargestellten Draht- oder Bandgebilde, das wirbelstromarm ausgebildet ist. Das bedeutet einerseits, daß die Dicke der einzelnen Strukturelemente 45 (Drähte, Streifen o. dgl.) geringer ist als die Strom-Eindringtiefe bei der verwendeten Frequenz und andererseits die Strukturen keinesfalls elektrisch geschlossen sind. Es ist daher in Fig. 6 ein offener Ringleiter 46 mit nach innen ragenden Ästen 45 vorgesehen, die unterschiedlich lang sind, so daß die gesamte Fläche gleichmäßig belegt wird. Der Ring 46 ist mit einer Erdung 34 verbunden, beispielsweise durch Anschluß an die geerdete Blechschale 23 des Bauelementes 11 (Fig. 1).

Fig. 7 zeigt eine Struktur, bei der von einem Mittelpunkt, an dem die Erdung angreift, Äste mit Leiterstrukturen 45 nach außen reichen, die ebenfalls so verästelt sind, daß sie das Kochfeld möglichst gleichmäßig abschirmen.

Durch diese Abschirmung wird, ohne daß wesentliche Verluste entstehen, das um die Induktionsspule herum ausgebildete elektrische Feld nach oben hin abgeschirmt und damit die elektrische Störstrahlung. Ferner können die Ableitströme vom Kochgefäß reduziert werden. Die Abschirmung könnte auch durch eine geerdete Schicht aus einem Widerstandsmaterial gebildet sein. Wesentlich ist, daß das Material unmagnetisch ist und zur Vermeidung von Wirbelstromverlusten einen gegenüber metallischen Leitern relativ hohen elektrischen Widerstand hat.

Basisschaltung

In Fig. 4 ist im Blockschaltbild und in Fig. 5 etwas detaillierter die Energieversorgung, Regelung und Steuerung der Induktionsspulen 30 dargestellt. Fig. 4 zeigt, daß der von dem Netzanschluß 22 kommende Wechselstrom über eine Funkentstörung 50 und Gleichrichtung 51 einem gemeinsamen Zwischenkreis 52 zugeführt wird, von dem aus beide Umrichter 53, die man auch als Hochfrequenz-Generatoren bezeichnen könnte, für jede Induktionsspule 30 versorgt werden. Zwischenkreis und Umrichter werden von einer Steuerung 54 gesteuert, die ihrerseits von den Mikro-Computern (MC) 42 Signale erhält.

In Fig. 5 ist die Schaltung einer Induktionsspule 30 detaillierter dargestellt, wobei Steuerung, Umrichter 53 und Induktionsspule 30 einer zweiten Kochstelle, die auch an den Zwischenkreis 52 angeschlossen ist, der Übersichtlichkeit halber nicht dargestellt ist. Wegen der Einzelheiten der Schaltung wird ausdrücklich auf Fig. 5 hingewiesen.

Jede Induktionsspule 30 liegt in einem Schwingkreis mit einer Halbbrücken-Schaltung, d. h. es sind zwei Zweige 55, 56 vorgesehen, in denen jeweils ein Kondensator 57, 58 und ein elektronischer Schalter 60, 61 liegt. Dabei kann es sich um IGBT-Bauelemente handeln, d. h. elektronische Halbleiter-Bauelemente, die mehrere Transistorfunktionen beinhalten und, von der Steuerung 62 angesteuert, außerordentlich schnell schalten können. Parallel zu diesen Leistungsschaltern 60, 61 ist je eine Freilaufdiode 63, 64 und ein Widerstand 65, 66 geschaltet. Diese Elemente bilden den als Schwingkreis ausgebildeten Umrichter 53, dem der Zwischenkreis 52 und die Gleichrichtung 51 vorgeschaltet ist. Eine Gleichrichterbrücke erzeugt eine pulsierende Gleichspannung, bei der also durch Gleichrichtung des Netz-Wechselstroms Sinus-Halbwellen der jeweils gleichen Polarität aneinandergereiht sind. Die Ausgänge der Gleichrichterbrücke 51 sind an die beiden Zweige 55, 56 gelegt. Im Zwischenkreis ist ein gemeinsamer Kondensator 67 zwischen den beiden Zweigen und ein von einem elektronischen Schalter 69 geschalteter Widerstand 68 vorhanden. Bei dem Schalter 69 kann es sich um einen MOS-FET handeln, der im Zusammenwirken mit dem Widerstand vermeidet, daß beim Einschalten des Umrichters Knackgeräusche auftreten. Er entlädt den Zwischenkreis.

Im Ansteuerungsweg zu den Schaltern 60, 61 ist je eine Ansteuereinheit 80 vorgesehen, die eine galvanische Trennung zwischen dem Niederspannungsteil 54 und der Leistungsseite enthält, beispielsweise durch Optokoppler. Ferner werden darüber die Schalter mit der Ssteuerenergie versorgt. Diese wird über Versorgungseinheiten 81 zugeführt, die in den Zweigen der Widerstände 65, 66 liegen und die je eine Zener-Diode 82 und eine Diode 83 sowie einen Kondensator 84 enthält. Die Zener-Dionde begrenzt die Spannung auf die für die Schalter 60, 61 erforderliche Steuerspannung und Diode und Kondensator wirken als Gleichrichtung. Es wird dadurch ein einfaches "Netzgerät" für die Schalter-Ansteuer-Energie geschaffen, das seine Energie aus dem Widerstandszweig bezieht, d. h. aus einer ohnehin zur Verfügung stehenden Energiequelle. Die Widerstände werden dadurch geringere Verlustenergie erzeugen und trotzdem werden die übrigen Verhältnisse nicht beeinträchtigt, z. B. der Stromwert am Punkt 70.

Der dargestellte Schwingkreis im symmetrischen Schaltungsaufbau könnte auch durch einen mit unsymmetrischem Aufbau ersetzt werden, bei dem statt der beiden Schwingkreiskondensatoren 57, 58 nur einer vorgesehen ist. Der Schwingkreis nimmt dann nur halbseitig Energie aus dem Netz auf. Insbesondere in Fällen, in denen es nicht auf die Einhaltung bestimmter Funkentstörwerte ankommt, könnte dieser schaltungstechnisch einfachere Aufbau vorteilhaft sein.

An einem Abgreifpunkt 70 zwischen der Induktionsspule 30 und den Kondensatoren 57, 58 des Schwingkreises ist eine Schaltsteuerung 71 für den Umrichter 53 angeschlossen, die ein Abtaste-Halteglied 72, einen Grenzwertspeicher 73, einen Komparator 74 und einen Ja/Nein-Speicher 75 enthält.

Diese Schaltsteuerung ist dazu vorgesehen, die Induktionsbeheizung sofort abzuschalten, wenn keine Leistungsabnahme erfolgt, beispielsweise wenn das Kochgefäß 13 von der Kochstelle entfernt ist und sie erst wieder einzuschalten, wenn ein Kochgefäß vorhanden ist. Dazu wird in relativ kurzen Zeitabständen eine Überprüfung vorgenommen, ob ein Abnehmer vorhanden ist. Dies geschieht durch eine Messung der Dämpfung der Induktionsspule 30.

Leistungssteuerung

Die Einschaltung des Schwingkreises erfolgt grundsätzlich im Nulldurchgang der Netzspannung, und zwar nach einem bestimmten Schema, das vom Mikro-Computer 42 vorgegeben wird und im folgenden noch erläutert wird. Der Schwingkreis wird über die elektronischen Leistungsschalter 60, 61 gesteuert, und zwar von der Steuerung 62 aus. Vor jeder Halbwelle der erzeugten Hochfrequenz-Spannung, die in der Größenordnung von 25 kHz liegt, erfolgt im Nulldurchgang eine Umschaltung zwischen den Leistungsschaltern 60, 61. Es entsteht damit ein vollkommen freischwingender Umrichter bzw. Wechselrichter 53, der geringe Schaltverluste hat. Zur Leistungseinstellung bzw. -regelung wird, wie noch erläutert wird, keine Phasenanschnitt-Steuerung verwendet, die in einer erzwungenen Schwingung resultieren würde. Die Frequenz ist nicht konstant und kann sich entsprechend der Sättigungseffekte durch Frequenzmodulation einstellen. Dadurch ist keine Überdimensionierung der elektrischen Leistungsschalter 60, 61 notwendig und es folgt auch eine geringe Oberwellenerzeugung.

Die Leistungseinstellung erfolgt durch eine Schwingungspaketsteuerung. Der Umrichter ist dabei im normalen Betrieb immer für eine volle Netzhalbwelle eingeschaltet. Grundlage der Leistungseinstellung ist, daß unterschiedliche Leistungsstufen durch Einschaltmuster bestimmt sind, die aus einer Aneinanderreihung bzw. Kombination gleicher oder auch unterschiedlicher, in sich symmetrischer Grundmuster von Wellenpaketen bestehen. Durch die vollständige Symmetrie wird eine Netzrückwirkung minimiert.

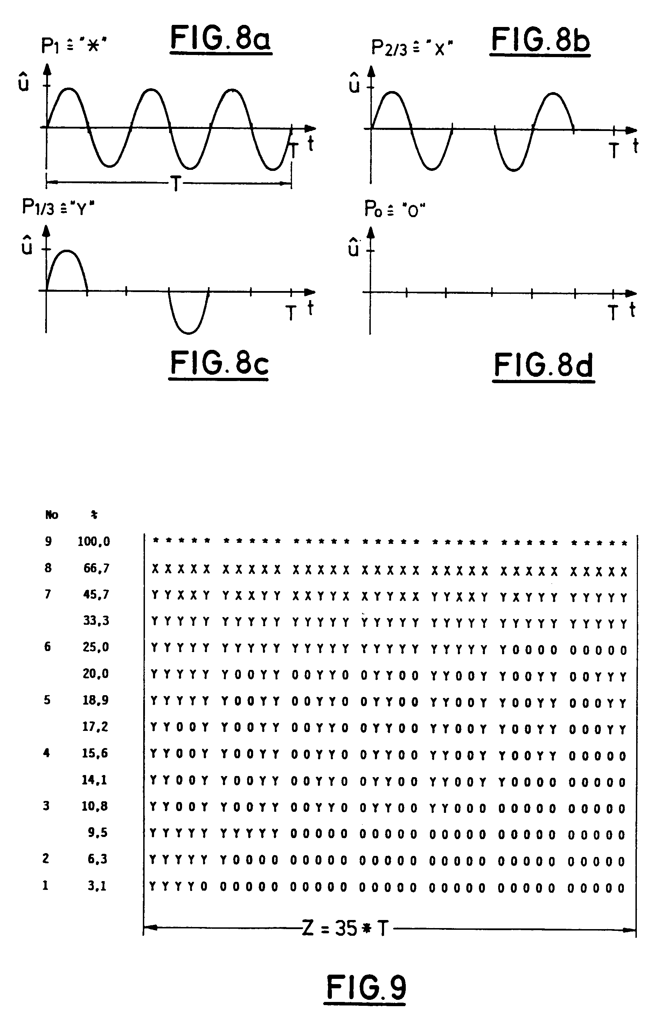

Die Figuren 8 und 9 zeigen ein Beispiel eines Musterbelegungsplans für eine solche Schwingungspaketsteuerung:

Ein Gesamt-Zeitintervall Z von 2,1 Sekunden Dauer ist in 35 Teilintervalle T von je 60 Millisekunden, d. h. sechs Netz-Halbwellen bei einer Frequenz von 50 Hz unterteilt. Es gibt insgesamt vier Grundmuster von Teilintervallen T, die in Fig. 8 a) bis d) als Diagramme "Spannung über Zeit" dargestellt sind:

Fig. 8 a) zeigt ein Teilintervall T mit der Bezeichnung "*", in dem alle sechs Netzhalbwellen vorhanden sind. Es ist also ein "Volleistungs"-Intervall.

Fig. 8b) zeigt ein Teilintervall T mit der Bezeichnung "X", bei dem insgesamt vier Netzhalbwellen so verteilt sind, daß sich insgesamt eine symmetrische Verteilung ergibt. Gegenüber dem "Volleistungs"-Muster nach Fig. 8 a) fehlt die dritte und sechste Netzhalbwelle (je eine positive und eine negative), so daß dieses Teilintervall "X" mit zwei Drittel Leistung belegt ist.

Fig. 8 c) enthält insgesamt nur zwei Netzhalbwellen, und zwar die erste als positive und die vierte als negative. Auch hier ergibt sich eine symmetrische Aufteilung. Dieses Teilintervall T mit der Bezeichnung "Y" hat also einen Leistungsanteil von einem Drittel.

Fig. 8 d) zeigt die Nulleistung, d. h. während dieses Teilleistungsintervalles "0" wird keine Leistung freigegeben.

Fig. 9 zeigt nun die Belegungspläne unter Verwendung der insgesamt 35 Teilintervalle T, die zusammen das Zeitintervall Z von 2,1 Sekunden Dauer bilden. Es sind dort lediglich beispielsweise verschiedene Leistungsstufen, beispielsweise entsprechend der Knebelstellung des Einstellknopfes 44, dargestellt, denen die unterschiedlichsten Kombinationen der Grundmuster entsprechend Fig. 8, jeweils hintereinandergereiht, zugeordnet sind. Aus den dahinter angegebenen Prozentsätzen der Leistungsfreigabe ist zu erkennen, daß auf diese Weise die Leistungskennlinie bei einer leistungsgesteuerten Induktionskochstelle beliebig den Praxisforderungen angepaßt werden kann. So ist beispielsweise die Leistung in den unteren Einstellstufen viel feiner regulierbar als in den oberen, was den Anforderungen der Praxis entspricht. Da jedes Grundmuster "Y" nach Fig. 8 c) nur weniger als einem Prozent Leistung innerhalb des Zeitraumes Z entspricht, kann die Leistung also prozentweise angepaßt werden. Es können dabei auch durchaus völlig unregelmäßige oder auch unstetige Verläufe erzielt werden, wenn sich dies als zweckmäßig herausstellt. Trotzdem ist jeweils eine Schaltung im Nulldurchgang der Spannung sichergestellt.

Fig. 8 zeigt positive und negative Netzhalbwellen, wie sie vor der Gleichrichtung vorliegen, um die Rückwirkungsfreiheit auf das Stromnetz zu demonstrieren. Im Schwingkreis liegen Netzhalbwellen in Form von gleichgerichtetem Wechselstrom vor.

In dem Zeitintervall Z, das beim erläuterten Beispiel 2,1 Sekunden beträgt, jedoch beliebig lang sein kann und in beliebig bemessene Teilintervalle T unterteilt sein kann, werden also die Grundmuster durch den Mikro-Computer gesteuert beliebig gemischt und erzeugen so eine netzseitig gleichstromfreie Steuerung bzw. Regelung in relativ kurzen, jedoch jeweils eine ganze Netzhalbwelle enthaltenen Impulsen. Die Einstellung kann über die Einstellelemente 43, wie in Fig. 9 dargestellt, rein leistungsabhängig sein, es können jedoch auch Regeleinflüsse von Temperaturfühlern o. dgl. mit auf den Mikro-Computer einwirken, so daß ein Regelkreis entsteht.

Der Start des Schwingkreises zur Erzeugung der die Induktionsspule 30 speisenden Hochfrequenz beginnt also grundsätzlich im Nulldurchgang der Netzspannung und Amplitude wie Frequenz im Schwingkreis ändern sich mit dem Ansteigen und Abfallen von Strom und Spannung über die einzelnen Netzhalbwellen. Die Frequenz ist also am Beginn jeder Halbwelle größer und nimmt im Bereich von deren Maximum ab, weil der Umrichter frei schwingt. Ferner ändert sich die Frequenz nicht nur mit dem Strom, sondern auch mit dem Topfmaterial, weil beispielsweise durch magnetische Sättigung im Topfboden die Induktivität nicht konstant ist. Wenn die Induktivität der Gesamtanordnung kleiner wird, ergibt sich eine höhere Frequenz. Diese Anordnung hat auch Vorteile bezüglich der Funkentstörbarkeit, weil breitbandige Störer leichter zu entstören sind. Außerdem werden weniger Oberwellen erzeugt, weil Phasenanschnitt nicht nötig ist.

Topferkennung

Die anhand von Fig. 5 dargestellte Topferkennung, die auch einen Schutz der Umgebung gegen zu starke Induktionsfelder und einen Selbstschutz des Umrichters bewirkt, arbeitet wie folgt:

Wenn bei eingeschalteter Kochstelle das Kochgefäß von dieser entfernt wird, so steigt der Strom im Schwingkreis stark an, weil die Dämpfung abnimmt. Der Strom im Umrichter wird im Punkt 70 abgegriffen und von dem Abtast-Halteglied 72 detektiert. Überschreitet er einen in dem Grenzwertspeicher 73 gespeicherten Grenzwert, so wird der Umrichter über die Steuerung 62 ausgeschaltet, indem die Leistungsschalter 60, 61 geschlossen bzw. nicht mehr geöffnet werden. Dies kann auch innerhalb einer Netzhalbwelle geschehen. Die im Schwingkreis dann vorhandene Energie wird über die Freilaufdioden 63, 64 in den Zwischenkreis 52 zurückgeleitet. Die Abschaltung arbeitet also in Abhängigkeit vom Strom im Schwingkreis außerordentlich schnell und verlustfrei.

Trotz eingeschalteter Kochstelle wird dann keine Leistung freigesetzt, bis wieder ein geeignetes Kochgefäß aufgesetzt wird. Diese Einschaltüberprüfung findet am Beginn jedes Zeitintervalls Z (im Beispiel 2,1 Sekunden) statt. Der Prüfvorgang läuft wie folgt ab:

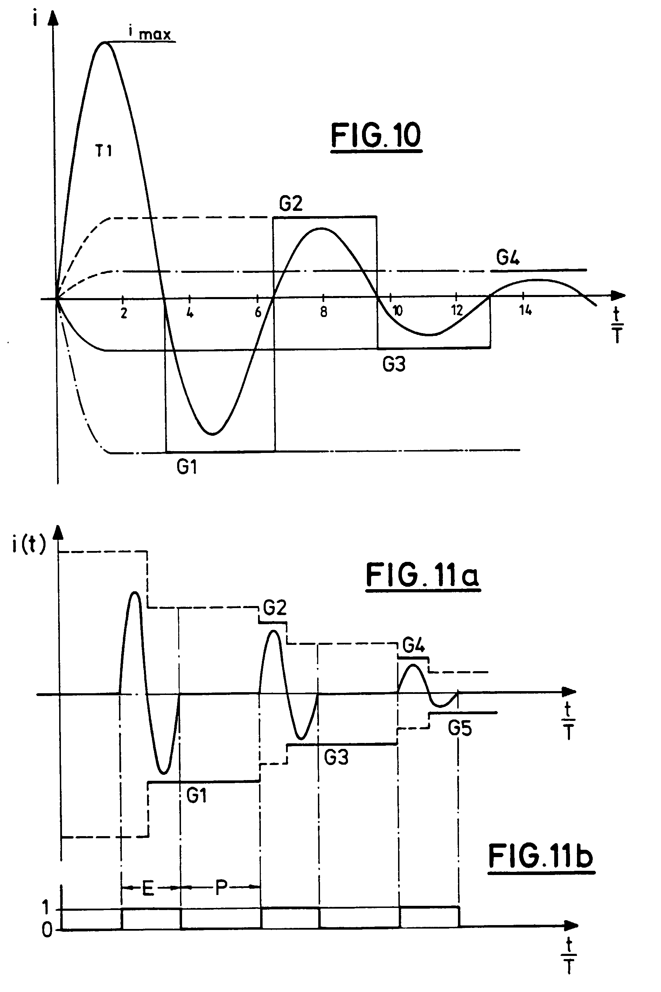

In der Steuerung 62 gibt eine phasengesteuerte Schleifenschaltung (PLL "Phase Locked Loop") die Steuerungstaktfrequenz für die Leistungsschalter 60, 61 vor. Während des Betriebs des Schwingkreises stellt sie sich auf die Frequenz des Hauptschwingkreises ein und schaltet die Leistungsschalter 60, 61 abwechselnd um. Im Leerlauf, d. h. während der Prüfphase gibt die Schleifenschaltung auf Anstoß durch den Mikro-Computer durch Schließen eines der beiden Leistungsschalter 60 oder 61 eine Halbschwingung frei. Vorher war über die Widerstände 65, 66 der Abgreifpunkt 70 auf eine bestimmte Spannung aufgeladen und damit eine gewisse Energie im Schwingkreis vorhanden. Bei der Einschaltung eines der Leistungsschalter fließt demnach für eine Hochfrequenz-Halbwelle Strom. Das Abtast-Halteglied, z. B. ein Spitzenwert-Detektor, das auch einen Stromwandler enthält, um die tatsächlich fließenden Ströme in Meßströme umzuwandeln, mißt den Strom während dieses Anschwingens und speichert das Ergebnis. Es entspricht dem Wert $i_{max}$ in Fig. 10. In dem Schwingkreis klingt nun die Amplitude entsprechend dem Energieverbrauch durch die Dämpfung nach einer bestimmten Funktion (entsprechend einer e-Funktion) ab. Falls dieses Abklingen zu langsam vor sich geht, ist die Dämpfung zu niedrig und die Bedingungen für eine Leistungseinschaltung sind nicht gegeben. Dies ist an Fig. 10 beispielsweise demonstriert, wo eine abklingende Schwingung gezeigt ist und die Grenzwerte G1, G2, G3 und G4 beispielsweise die Werte angeben, die im Grenzwertspeicher 73 gespeichert sein könnten. Werden sie überschritten, so bedeutet dies "keine ausreichende Dämpfung" und es wird ein Signal an den Mikro-Computer: "Keine Einschaltung" gegeben.

Die Topferkennung arbeitet also nach dem Prinzip der Dämpfungsmessung, wobei die Prüfung nur mit einer Hälfte des Umrichters arbeitet, so daß der Leistungsschwingkreis nicht anläuft, wozu eine wechselweise Einschaltung der beiden Leistungsschalter 60, 61 nötig wäre.

Beim Ausführungsbeispiel der Schaltung nach Fig. 4 und 5 findet der Prüfvorgang so statt, daß aus der ersten Schwingung beim Einschalten eines der Leistungstransistoren 60 oder 61 für einen sehr kurzen Zeitraum E von beispielsweise 20 Mikrosekunden (etwa eine Halbschwingung in Leerlauffrequenz) der Stromwert gemessen, durch das Abtast-Halteglied 72 festgehalten und daraus im Grenzwertspeicher 73 die nachfolgenden Grenzwerte, z. B. G1 bis G5 abgeleitet werden. Unter Steuerung durch den Mikro-Computer legt die Schleifenschaltung PLL danach Pausen P in gleicher Größenordnung ein und schaltet dann wiederum den Leistungstransistor ein. Aus dem Stromabfall in der nächsten Schwingung (siehe Fig. 11 a) kann nun durch Vergleich mit den Grenzwerten, was über den Komparator 74 erfolgt, festgestellt werden, ob der Strom diese Grenzwerte (hier G2 und G3) überschritt. Das Ergebnis dieser Überprüfung wird im Speicher 75 zwischengespeichert.

Es erfolgt dann noch eine zweite Einschaltung, wo die Grenzwerte G4 und G5 zum Vergleich herangezogen werden. Diese zweite Messung erfolgt sicherheitshalber, um eine Verfälschung durch starke Frequenzabweichung, z. B. bei einem Aluminium- oder Kupfergegenstand statt eines Kochgefäßes Fehler zu vermeiden. Ergibt diese Messung ebenfalls kein Überschreiten der Grenzwerte, so ist die Dämpfung ausreichend und es erfolgt eine Leistungseinschaltung des Schwingkreises durch die Steuerung 62. Da die ganze Messung sich im Bereich von Mikrosekunden abspielte, klang die Energie im Schwingkreis ab, weil sie über den den Leistungsschaltern 60, 61 parallel geschalteten hochohmigen Spannungsteiler 65, 66 in dieser Zeit nicht ersetzt werden konnte. Bis zum nächsten Prüfzyklus am Beginn des nächsten Zeitintervalls Z (nach 2,1 Sekunden) ist jedoch der Schwingkreis über diesen Spannungsteiler wieder mit der entsprechenden Prüfspannung versorgt und eine erneute Prüfung kann beginnen, falls eine Überschreitung der Grenzwerte festgestellt und damit "zu wenig Dämpfung" detektiert wurde und der Schwingkreis nicht im Leistungsbetrieb geschaltet wurde.

Die Prüfung kann mit einem sehr geringen Prüfstrom stattfinden, beispielsweise mit einem Zehntel des Nennstroms bei Leistungsbetrieb. Da außerdem durch die sehr geringen Einschaltzeiten von beispielsweise 20 Mikrosekunden innerhalb des Prüfzyklus von 2 Sekunden der Schwingkreis im Prüfbetrieb ca. nur 1/100.000stel der Gesamtzeit in Betrieb ist, beträgt die Gesamtleistungsfreigabe während der Prüfung nur einen völlig unbedeutenden Bruchteil der Gesamtleistung der Kochstelle und kann sowohl energetisch als auch von der Beeinflussung der Umgebung her vernachlässigt werden. Es liegt beispielsweise bei einer Kochstelle von 2.000 W in der Größenordnung von 1 bis 4 mW.

Durch diese Topferkennung mittels Überprüfung der möglichen Leistungsabnahme (Dämpfung) findet also eine sehr zuverlässige, kurzfristig zugreifende und prüfenergiearme Messung statt. Statt der Strommessung im Schwingkreis kann beispielsweise auch eine Spannungsmessung am Schwingkreiskondensator verwendet werden, um durch Messung des Abklingens der Spannungsamplitude einen Vergleich mit den aufgrund der Anfangsmessung ermittelten Grenzwerten die Prüfung durchzuführen.

Die Prüfung arbeitet jedenfalls nur mit einer Hälfte des Umrichters, daher läuft der Leistungsschwingkreis während der Prüfphase nicht an. Ergeben bei den beiden aufeinanderfolgenden Messungen (zweite und dritte Einschaltung des PLL) die im Speicher 75 gespeicherten Werte beide "Dämpfung ausreichend" (Grenzwerte nicht überschritten), so wird in der Steuerung 72 unter Taktgabe der Schleifenschaltung PLL der Schwingkreis durch wechselseitiges Einschalten der Leistungsschalter 60, 61 mit vollem Strom in Gang gesetzt. Die Leistungsfreigabe selbst erfolgt dann entsprechend dem anhand der Figuren 8 und 9 erläuterten Leistungsschema so lange, bis entweder die Kochstelle über das Einstellglied 43 ausgeschaltet wird oder durch Wegnahme des Topfes der Selbstschutz zugreift und die Leistung abgeschaltet wird, so daß sie wieder in die Prüfphase übergeht.

**Patentansprüche**

1. Induktive Kochstellenbeheizung für Kochgefäße (13) o. dgl., mit einer Beheizungseinheit, die wenigstens ein Induktionserzeugungsmittel (14) und die zugehörige Leistungs-, Frequenzgenerierungs- und Steuerelektronik für das wenigstens eine Induktionserzeugungsmittel (14) in einem zusammenhängenden Bauelement (11) enthält und durch eine Platte (12), z.B. eine Glaskeramikplatte, hindurch die Kochgefäße (13) erwärmt, dadurch gekennzeichnet, daß die Beheizungseinheit zur Anordnung unterhalb einer Platte (12) ausgebildet ist, die selbst keinen Teil der Beheizungseinheit bildet, und daß das wenigstens eine Induktionserzeugungsmittel (14) und Leistungssteuerelemente (21) an einem Kühlkörper (15) angeordnet sind, der unterhalb des Induktionserzeugungsmittels (14) verläuft und mit Kühlrippen (18) versehen ist.

2. Kochstellenbeheizung nach Anspruch 1, dadurch gekennzeichnet, daß das Induktionserzeugungsmittel (14) eine Induktionsspule (30) ist, die vorzugsweise als flache, scheibenförmige Spule ausgebildet ist, die auf ihrer von der Platte (12) abgewandten Seite an magnetische Rückschlußmittel (31), wie eine ggf. segmentierte Ferrit-Schicht, angrenzt.

3. Kochstellenbeheizung nach Anspruch 1 oder 2, dadurch gekennzeichnet, daß das Bauelement (11) die Form einer flachen, von unten an die Platte (12) andrückbaren, handhabbaren Platte oder Schale (23) hat und/oder dem Bauelement (11) gesondert von ihm anzuordnende Einstell- oder Regelorgane (26) zugeordnet sind, wobei insbesondere jedes Bauelement (11) eine der Zahl der Kochstellen (10) entsprechende Anzahl von Hochfrequenzgeneratoren, z.B. Umrichtern (53), jedoch einen gemeinsamen, Gleichrichtungs- und Entstörungs-Mittel enthaltenden Zwischenkreis (52) enthält.

4. Kochstellenbeheizung nach einem der vorhergehenden Ansprüche, dadurch gekennzeichnet, daß der Kühlkörper (15) von einem in der Beheizungseinheit (11) vorgesehenen Lüfter (17) mit Kühlluft beaufschlagt ist, insbesondere entlang zwischen den Kühlrippen (18) gebildeten Kanälen (19), die bei Anordnung mehrerer Induktionserzeugungsmittel (14) an einer Beheizungseinheit (11) im wesentlichen längs einer diese verbindenden Achse (9) verlaufen, wobei vorteilhaft der Lüfter (17) ein in einer Ausnehmung des Kühlkörpers (15) angeordneter Radiallüfter mit einem Lüfterrad und mit zentraler Ansaugung von unten her ist, der vorzugsweise nahe einem Ende des Kühlkörpers angeordnet ist und/oder daß zwischen dem Lüfterrad und der äußeren Begrenzung der Ausnehmung (19) ein Raum (93) gebildet ist, der Querschnitt in Strömungsrichtung der aus dem Lüfterrad austretenden und in die Kühlkanäle strömenden Luft zunimmt, wobei insbesondere der Lüfter (17) exzentrisch in der wesentlichen kreisförmigen Ausnehmung (90) angeordnet ist.

5. Kochstellenbeheizung nach Anspruch 4, dadurch gekennzeichnet, daß die Steuerelektronik (20, 21) in einem längs neben dem Kühlkörper (15) verlaufenden Raum (28a) angeordnet ist, dessen eine Wandung von einer Seitenrippe (18a) des Kühlkörpers (15) gebildet ist, wobei die Leistungssteuerelemente (21) an die Seitenrippe (18a) thermisch angeschlossen sind und dessen Boden vorzugsweise von einer die elektronischen Anschlüsse der Steuerelektronik (20) aufweisenden Platine (16) gebildet wird, und daß in der Seitenrippe (18a) Durchbrüche zur Belüftung des Raumes (28a) vorgesehen sind.

6. Kochstellenbeheizung nach einem der vorhergehenden Ansprüche, dadurch gekennzeichnet, daß die Leistungssteuerelemente (21) im Bereich zwischen mehreren Induktionserzeugungsmitteln (14) oder vorzugsweise an einer seitlichen Kühlrippe des Kühlkörpers angeordnet sind.

7. Kochstellenbeheizung nach einem der vorhergehenden Ansprüche, dadurch gekennzeichnet, daß die Steuerelektronik (20), insbesondere ihr Schwachstromteil, auf wenigstens einer Platine (16) angeordnet ist, die an der der Platte (12) abgekehrten Seite des Kühlkörpers (15) oder vorzugsweise neben der Kühlplatte verläuft und ggf. am Kühlkörper (15) neben oder zwischen den Kühlrippen (18) ausgebildete Kanäle bzw. Räume (19, 28) zumindest teilweise abgrenzt.

8. Kochstellenbeheizung nach einem der vorhergehenden Ansprüche, dadurch gekennzeichnet, daß zwischen der Platte (12) und den Induktionserzeugungsmitteln (14) eine thermische Isolation (32) angeordnet ist.

9. Induktive Kochstellenbeheizung nach einem der vorhergehenden Ansprüche, gekennzeichnet durch eine optische Meßeinrichtung (36, 41) zur ggf. mittelbaren Temperaturmessung der Platte (12), unter der die Beheizung angeordnet ist, wobei die Meßeinrichtung vorzugsweise berührungslos arbeitet und einen im Bereich des Magnetfeldes eines Induktionserzeugungsmittels (14), vorzugsweise in dessen Mitte, wirksamen, jedoch gegebenenfalls außerhalb dieses Bereiches angeordneten Fühler (36) aufweist, der insbesondere einen bestimmten spektralen Empfindlichkeitsbereich aufweist, der vorzugsweise im Bereich infraroter Strahlung liegt, wobei vorzugsweise die Meßeinrichtung zum Schutz der Platte (12) gegen Überhitzung vorgesehen und auf die induktive Beheizung leistungsmindernd bzw. - abschaltend einwirkt, sowie mit einer Wiedereinschaltsperre versehen ist.

10. Kochstellenbeheizung nach einem der vorhergehenden Ansprüche, dadurch gekennzeichnet, daß die Induktionsspule (30) als flache, scheibenförmige Spule ausgebildet ist, die auf ihrer von der Platte (12) abgewandten Seite an magnetische Rückschlußmittel (31), wie eine vorzugsweise segmentierte Ferrit-Schicht, angrenzt und auf deren anderer Seite eine thermische Isolation (32) angeordnet ist.

**Claims**

1. Inductive cooking point heating system for cooking utensils (13) or the like, with a heating unit, which contains at least one induction generator (14) and the associated power, frequency generating and control electronics for the at least one induction generator (14) in a continuous component (11) and through a plate (12), e.g. a glass ceramic plate, heats the cooking utensils (13), characterized in that the heating unit is constructed for placing below a plate (12), which itself does not form part of the heating unit, and that the at least one induction generator (14) and power control elements (21) are located on a cooling body (15), which runs below the induction generator (14) and is equipped with cooling ribs (18).

2. Cooking point heating system according to claim 1, characterized in that the induction generator (14) is an induction coil (30), which is preferably constructed as a flat, disk-shaped coil, which on its side remote from the plate (12) is adjacent to magnetic yoke means (31), such as an optionally segmented ferrite layer.

3. Cooking point heating system according to claim 1 or 2, characterized in that the component (11) is in the form of a flat, manipulatable plate or tray (23) which can be pressed from below onto the plate (12) and/or with the component (11) are associated setting or regulating members (26) to be arranged separately therefrom and in particular each component (11) contains a number of high frequency generators, e.g. inverters (53) corresponding to the number of cooking points (10), but a common intermediate circuit (52) containing rectifying and interference eliminating means.

4. Cooking point heating system according to one of the preceding claims, characterized in that the cooling body (15) is supplied with cooling air by a fan (17) located in the heating unit (11) and in particular along channels (19) formed between the cooling ribs (18) and which when several induction generators (14) are provided on a heating unit (11) run essentially along an axis (9) connecting the same, the fan (17) advantageously being a radial fan located in a recess of the cooling body (15) having an impeller and with central suction from below, which is preferably located close to one end of the cooling body and/or that between the impeller and the outer boundary of the recess (19) a space (93) is formed, the cross-section in the flow direction of the air passing out of the impeller and into the cooling channels increases and in particular the fan (17) is positioned eccentrically in the substantially circular recess (90).

5. Cooking point heating system according to claim 4, characterized in that the control electronics (20, 21) is located in a space (28a) running along beside the cooling body (15) and whose one wall is formed by a lateral rib (18a) of the cooling body (15), the power control elements (21) being thermally connected to the lateral rib (18a) and whose bottom is preferably formed by a mounting plate (16) having the electronic connections of the control electronics (20) and that openings for ventilating the space (28a) are provided in the lateral rib (18a).

6. Cooking point heating system according to one of the preceding claims, characterized in that the power control elements (21) are located in the area between several induction generators (14) or preferably on a lateral cooling rib of the cooling body.

7. Cooking point heating system according to one of the preceding claims, characterized in that the control electronics (20), particularly their low current part, are located on at least one mounting plate (16), which passes along the side of the cooling body (15) remote from the plate (12) or preferably alongside the cooling plate and at least partly bounds channels or spaces (19, 28) formed on the cooling body (15) alongside or between the cooling ribs (18).

8. Cooking point heating system according to one of the preceding claims, characterized in that between the plate (12) and the induction generators (14) is provided a thermal insulation (32).

9. Inductive cooking point heating system according to one of the preceding claims, characterized by an optical measuring device (36, 41) for the optionally indirect temperature measurement of the plate (12) below which the heating system is located, the measuring device preferably operating in contactless manner and has a sensor (36) acting in the vicinity of the magnetic field of an induction generator (14), preferably in its centre, but optionally outside said area, which in particular has a specific spectral sensitivity range, which is preferably in the infrared radiation range and preferably the measuring device is provided for protecting the plate (12) against overheating and acts in a power-reducing or disconnecting manner on the inductive heating system and is provided with a reconnection inhibiting means.

10. Cooking point heating system according to one of the preceding claims, characterized in that the induction coil (30) is constructed as a flat, disk-shaped coil, which on its side remote from the plate (12) is adjacent to magnetic yoke means (31), such as a preferably segmented ferrite layer and on whose other side is located a thermal insulation (32).

## Revendications

1. Chauffage inductif de postes de cuisson pour des récipients de cuisson (13) ou analogues, avec une unité de chauffage qui contient dans un élément de construction solidarisé (11) au moins un moyen de production d'induction (14) et le montage électronique associé de puissance, de génération de fréquence et de commande pour le ou les moyens de production d'induction (14) et qui réchauffe les récipients de cuisson (13) à travers une plaque (12), par exemple une plaque en vitrocéramique, **caractérisé** en ce que l'unité de chauffage est conçue pour être disposée en dessous d'une plaque (12) qui ne fait elle-même pas partie de l'unité de chauffage, et en ce que le ou les moyens de production d'induction (14) et des éléments de commande de puissance (21) sont disposés sur un corps de refroidissement (15) qui s'étend en dessous du moyen de production d'induction (14) et qui est pourvu de nervures de refroidissement (18).

2. Chauffage de postes de cuisson selon la revendication 1, **caractérisé** en ce que le moyen de production d'induction (14) est une bobine d'induction (30), qui est de préférence réalisée sous forme de bobine plate en forme de disque qui, sur son côté opposé à la plaque (12), est limitrophe de moyens de dérivation magnétique (31), tels qu'une couche de ferrite éventuellement segmentée.

3. Chauffage de postes de cuisson selon la revendication 1 ou 2, **caractérisé** en ce que l'élément de construction (11) a la forme d'une plaque ou coque plate (23) maniable, pouvant être pressée par le dessous contre la plaque (12), et/ou des organes de régulation ou de réglage (26) à disposer séparément de l'élément de construction (11) sont associés à ce dernier, chaque élément de construction (11) contenant notamment un nombre de générateurs à haute fréquence, par exemple de convertisseurs de fréquence (53), correspondant au nombre de postes de cuisson (10), mais un circuit intermédiaire commun (52) contenant des moyens de redressement et de déparasitage.

4. Chauffage de postes de cuisson selon une des revendications précédentes, **caractérisé** en ce que le corps de refroidissement (15) est alimenté en air de refroidissement par un ventilateur (17) prévu dans l'unité de chauffage (11), notamment le long de canaux (19) qui sont formés entre les nervures de refroidissement (18) et qui, en cas de disposition de plusieurs moyens de production d'induction (14) sur une unité de chauffage (11), s'étendent essentiellement le long d'un axe (9) reliant ces derniers, le ventilateur (17) étant de préférence un ventilateur radial disposé dans un évidement du corps de refroidissement (15) et doté d'une roue de ventilateur et d'une aspiration centrale par le bas, ventilateur qui est de préférence disposé au voisinage d'une extrémité du corps de refroidissement, et/ou en ce qu'une chambre (93) est formée entre la roue de ventilateur et la délimitation extérieure de l'évidement (90), chambre dont la section augmente dans la direction d'écoulement de l'air sortant de la roue de ventilateur et s'écoulant dans les canaux de refroidissement, le ventilateur (17) étant notamment disposé excentriquement dans l'évidement sensiblement circulaire (90).

5. Chauffage de postes de cuisson selon la revendication 4, **caractérisé** en ce que le montage électronique (20, 21) est disposé dans une chambre (28a) s'étendant longitudinalement à côté du corps de refroidissement (15), chambre dont une paroi est formée par une nervure latérale (18a) du corps de refroidissement (15), les éléments de commande de puissance (21) étant thermiquement raccordés à la nervure latérale (18a) et le fond de ladite chambre étant de préférence formé par une plaquette (16) présentant les connexions électroniques du montage électronique de commande (20), et en ce que des percements sont prévus dans la nervure latérale (18a) pour l'aération de la chambre (28a).

6. Chauffage de postes de cuisson selon une des revendications précédentes, **caractérisé** en ce que les éléments de commande de puissance (21) sont disposés dans la région située entre plusieurs moyens de production d'induction (14) ou, de préférence, sur une nervure de refroidissement latérale du corps de refroidissement.

7. Chauffage de postes de cuisson selon une des revendications précédentes, **caractérisé** en ce que le montage électronique de commande (20), notamment sa partie de courant faible, est disposé sur au moins une plaquette (16) qui s'étend sur le côté du corps de refroidissement (15) opposé à la plaque (12) ou de préférence à côté de la plaque de refroidissement et qui, éventuellement, délimite au moins partiellement sur le corps de refroidissement (15) les canaux ou chambres (19, 28) respectivement formés entre les nervures de refroidissement (18) ou à côté de ces dernières.

8. Chauffage de postes de cuisson selon une des revendications précédentes, **caractérisé** en ce qu'une isolation thermique (32) est disposée entre la plaque (12) et les moyens de production d'induction (14).

9. Chauffage inductif de postes de cuisson selon une des revendications précédentes, **caractérisé** par un dispositif de mesure optique (36, 41) pour la mesure éventuellement indirecte de la température de la plaque (12) en dessous de laquelle est disposé le chauffage, le dispositif de mesure travaillant de préférence sans contact et présentant un palpeur (36) actif dans la région du champ magnétique d'un moyen de production d'induction (14), de préférence en son milieu, mais éventuellement disposé en dehors de cette région, palpeur qui présente notamment une plage déterminée de sensibilité spectrale, qui se situe de préférence dans la région du rayonnement infrarouge, le dispositif de mesure étant de préférence prévu pour protéger la plaque (12) contre la surchauffe et agissant sur le chauffage inductif pour réduire sa puissance ou encore pour le déconnecter, et étant pourvu d'un verrouillage de réenclenchement.

10. Chauffage de postes de cuisson selon une des revendications précédentes, **caractérisé** en ce que la bobine d'induction (30) est réalisée sous la forme d'une bobine plate en forme de disque qui, sur son côté opposé à la plaque (12), est limitrophe de moyens de dérivation magnétique (31), tels qu'une couche de ferrite de préférence segmentée, et sur l'autre côté de laquelle est disposée une isolation thermique (32).

**FIG.1**

**FIG.2**

**FIG.3**

FIG.4

FIG.6

FIG.7

**FIG.5**

**FIG.12**

## FIG.8a

$P_1 \hat{=} "*"$

## FIG.8b

$P_{2/3} \hat{=} "x"$

## FIG.8c

$P_{1/3} \hat{=} "Y"$

## FIG.8d

$P_0 \hat{=} "O"$

| No | % | | | | | | | | | | | | | | | | | | | | | | | | | | | | | | | | | | |
|----|-----|---|---|---|---|---|---|---|---|---|---|---|---|---|---|---|---|---|---|---|---|---|---|---|---|---|---|---|---|---|---|---|---|---|---|---|
| 9 | 100,0 | * | * | * | * | * | * | * | * | * | * | * | * | * | * | * | * | * | * | * | * | * | * | * | * | * | * | * | * | * | * | * | * | * | * | * |
| 8 | 66,7 | X | X | X | X | X | X | X | X | X | X | X | X | X | X | X | X | X | X | X | X | X | X | X | X | X | X | X | X | X | X | X | X | X | X | X |
| 7 | 45,7 | Y | Y | X | X | Y | Y | X | X | Y | Y | X | X | Y | Y | X | X | Y | Y | X | X | Y | Y | X | X | Y | Y | X | Y | Y | Y | Y | Y | Y | Y | Y |
| | 33,3 | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y | Y |
| 6 | 25,0 | Y | Y | Y | Y | Y | Y | Y | Y | Y | Y | Y | Y | Y | Y | Y | Y | Y | Y | Y | Y | Y | Y | Y | Y | Y | Y | 0 | 0 | 0 | 0 | 0 | 0 | 0 | 0 | 0 |
| | 20,0 | Y | Y | Y | Y | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | Y |
| 5 | 18,9 | Y | Y | Y | Y | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | 0 | Y | Y |
| | 17,2 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | 0 | Y | Y |
| 4 | 15,6 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | 0 | 0 | 0 |
| | 14,1 | Y | Y | 0 | 0 | Y | Y | 0 | 0 | Y | Y | 0 | 0 | Y | Y | 0 | 0 | Y | Y | 0 | 0 | Y | Y | 0 | 0 | Y | Y | 0 | 0 | 0 | 0 | 0 | 0 | 0 | 0 | 0 |
| 3 | 10,8 | Y | Y | 0 | 0 | Y | Y | 0 | 0 | Y | Y | 0 | 0 | Y | Y | 0 | 0 | Y | Y | 0 | 0 | Y | Y | 0 | 0 | 0 | 0 | 0 | 0 | 0 | 0 | 0 | 0 | 0 | 0 | 0 |
| | 9,5 | Y | Y | Y | Y | Y | Y | Y | Y | Y | Y | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 2 | 6,3 | Y | Y | Y | Y | Y | Y | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| 1 | 3,1 | Y | Y | Y | Y | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

$Z = 35 * T$

## FIG.9

FIG.10

FIG.11a

FIG.11b

FIG. 13

FIG. 14

EP 0 561 219 B1

FIG. 15